## Europäisches Patentamt

## European Patent Office

## Office européen des brevets

(19)

(11) Veröffentlichungsnummer: **0 207 363**

**B1**

(12) **EUROPÄISCHE PATENTSCHRIFT**

(45) Veröffentlichungstag der Patentschrift:
**19.04.89**

(51) Int. Cl.⁴: **E 04 B 1/60**

(21) Anmeldenummer: **86108276.6**

(22) Anmeldetag: **18.06.86**

(54) Verbundprofil und Verfahren zu seiner Herstellung.

(30) Priorität: **04.07.85 DE 3523921**

(43) Veröffentlichungstag der Anmeldung:
**07.01.87 Patentblatt 87/2**

(45) Bekanntmachung des Hinweises auf die Patenterteilung:
**19.04.89 Patentblatt 89/16**

(84) Benannte Vertragsstaaten:
**AT BE CH DE FR GB IT LI LU NL SE**

(56) Entgegenhaltungen:
**FR-A-1 484 683**
**FR-A-2 245 243**
**US-A-3 160 249**
**US-A-3 363 386**
**US-A-3 771 277**

(73) Patentinhaber: **VEREINIGTE ALUMINIUM- WERKE AKTIENGESELLSCHAFT, Berlin - Bonn Postfach 2468 Georg- von- Boeselager- Strasse 25, D-5300 Bonn 1 (DE)**

(72) Erfinder: **Griep, Winfried, Kirchfeldstrasse 1, D-5300 Bonn 3 (DE)**
Erfinder: **Bergheim, Hans, Am Wichelshof 34, D-5300 Bonn 1 (DE)**

(74) Vertreter: **Müller- Wolff, Thomas, Dipl.- Ing., c/o Vereinigte Aluminium- Werke AG Patentabteilung Postfach 2468, D-5300 Bonn 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verbundprofil aus mindestens zwei Einzelprofilen, die an mindestens einer Seitenfläche eine gemeinsame Berührungsebene bilden und formschlüssig miteinander verklammert sind, wobei die Einzelprofile, an der die Berührungsebene bildenden Seitenflächen mindestens je ein Schalensegment aufweisen, die in diametraler Richtung in bezug auf die durch die Segmente verlaufenden Mittelachsen verzahnt sind und in die ein Verbindungskörper eingelegt ist.

Ein Verbundprofil der eingangs genannten Art ist aus US-A-3 771 277 bekannt. Um bei dieser Verbindung Schubkräfte in Längsrichtung zu übertragen müssen zusätzliche Verbindungsarten wie Schrauben, Kleben oder Bördeln angewendet werden.

Diese zusätzlichen Verbindungsarten sind mit unterschiedlichen Nachteilen behaftet. So tritt durch die Verschraubung eine Schwächung durch spanende Bearbeitung auf. Für die Verklebung sind sehr saubere Oberflächen und erhebliche Trocknungszeiten zu beachten. Allen Verfahren ist wie auch dem Bördeln gemeinsam, daß die Bearbeitung relativ aufwendig und bei bestimmten Profilformen mit verdeckter Berührungsfläche nur unter großen Schwierigkeiten durchführbar ist.

Aufgabe der vorliegenden Erfindung ist es daher, die genannten Nachteile zu vermeiden und ein Verbundprofil sowie ein Verfahren zum Verbinden von Profilen, insbesondere Metallprofilen anzugeben, das eine einfache, hochfeste Verbindung Langgestreckter Profile - auch an unzugänglichen Berührungsflächen - ermöglicht.

Erfindungsgemäß wird diese Aufgabe durch die in den Patentansprüchen angegebenen Merkmale gelöst. Die dabei verwendeten Materialien sollten aufeinander abgestimmt werden. So ist es empfehlenswert, das Innenrohr aus einem harten Werkstoff, vorzugsweise der Aluminiumlegierung vom Typ AlMgSi herzustellen, der bei der Aufweitung eine Kaltverfestigung erfährt. Die schalenförmigen Segmente der zu verbindenden Profile sollten aus einem weichen und dehnbaren Material sein, vorteilhafterweise der Aluminiumlegierung vom TYP AlCuMg.

Durch diese Abstimmung wird erreicht, daß der Verbund durch die Versteifung von Innen- und Außenrohr eine Erhöhung der Gesamtfestigkeit erfährt.

Im folgenden wird die Erfindung anhand mehrerer Ausführungsbeispiele erläutert.

Die Figuren 1 - 4 zeigen die Montage des erfindungsgemäßen Verbundprofils.

Figur 5 zeigt eine Alternative gemäß Anspruch 8.

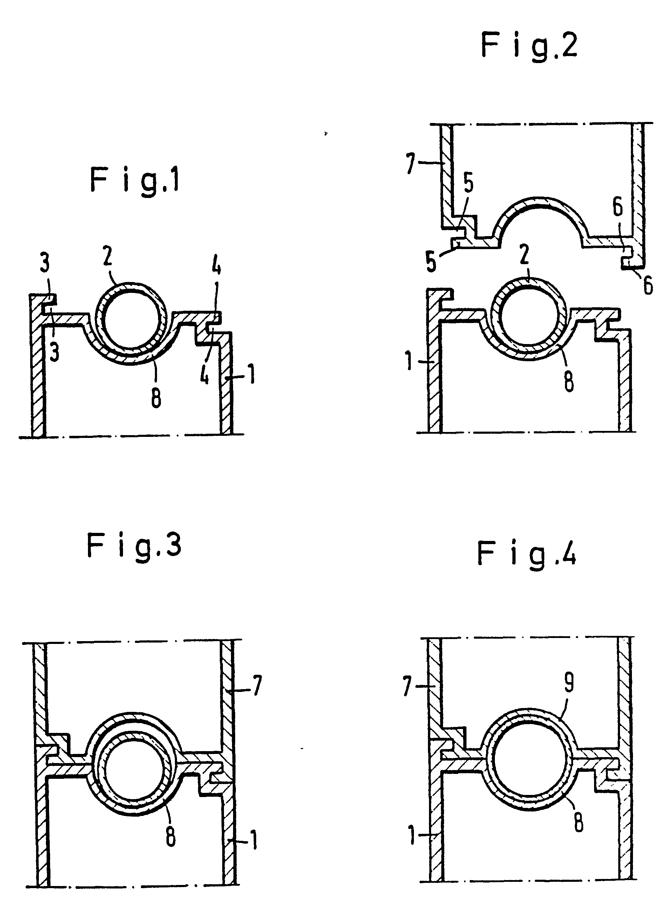

In den Fig. 1 - 4 ist das untere Einzelprofil als Metallprofil mit 1 und der Spreizkörper als Innenrohr mit 2 bezeichnet. Die Verklammerungteile 3, 4 sind C-förmig ausgebildet und passen in entsprechend ausgebildete Verklammerungteile 5, 6 des oberen Teilprofils 7. Aus Fig. 2 und 3 ist ersichtlich, daß das obere Teilprofil 7 mit dem unteren Teilprofil 1 verklammert werden kann, ohne daß das Innenrohr 2 aus der Halbschale 8 entfernt werden muß. Gemäß Figur 4 wird dann das Innenrohr aufgeweitet und dehnt dabei auch die untere und obere Halbschale 8, 9 mit. Insgesamt ergibt dies eine kraftschlüssige Verbindung, die in Längsrichtung des Profils mind. 20 t/m Schubkraft aufnehmen kann.

Die Aufweitung des Innenrohrs geschieht über einen Dorn, der mit Übermaß durch das Innenrohr 2 gezogen wird. Durch die Verklammerung der C-förmigen Nuten 3 bis 6 kann das Verbundprofil nicht mehr gelöst werden.

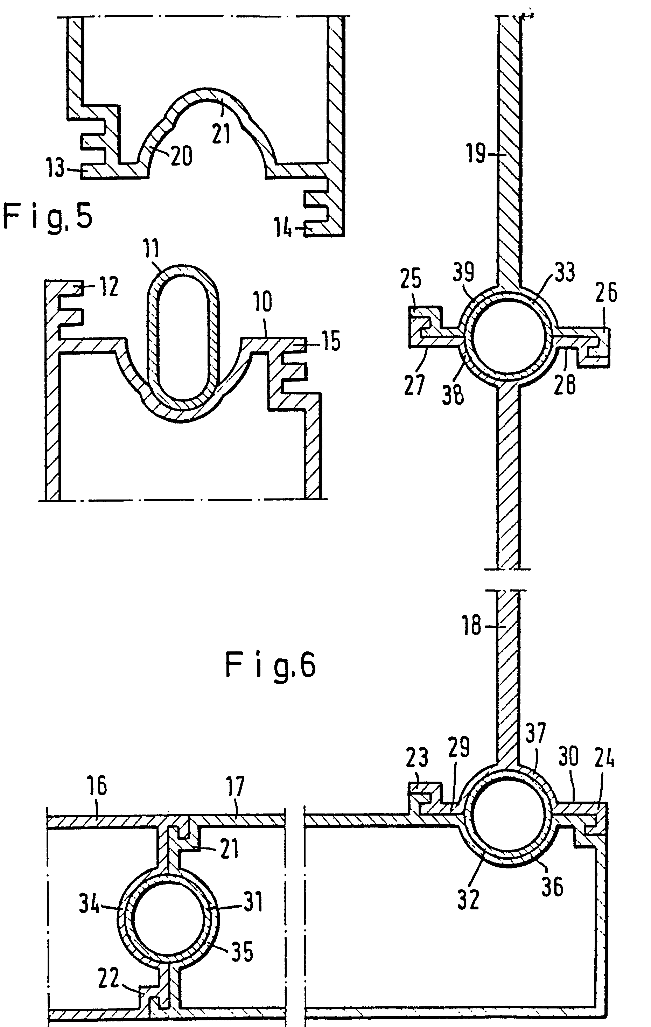

Figur 5 zeigt in alternativer Ausführung einen Spreizkörper 11 mit ovalem Querschnitt, dessen Hochachse senkrecht zur Berührungsfläche 10 des Teilprofils steht. Dieses ist besonders bei schmalen Profilen von Vorteil, da damit die Verklammerung des oberen und unteren Teilprofils auch mit eingelegtem Rohr erfolgen kann. Ferner ist es von Vorteil bei Profilen mit breitem Verzahnungssstegen 12 - 15. Die Halbschale 20 ist hier mit einer zusätzlichen Vertiefung 21 versehen, die eine senkrechte Anordnung des Spreizkörpers 11 erleichtert.

In Fig. 6 ist die Verbindung von vier Metallprofilen 16 - 19 dargestellt. Es handelt sich dabei um Kammerprofile 16, 17 und Einsteg-Profile 18, 19 wobei die Verklammerung sowohl bei Profilen gleicher Art als auch bei unterschiedlichen Profilarten dargestellt ist. Im Gegensatz zu der in Fig. 5 gezeigten Verzahnung mit E-förmig ausgebildeten Nuten 12 - 15 werden hier C-förmige Nuten 21 - 26 verwendet. Diese Nuten können zur Aufnahme größerer Biegemomente an den Nutenstegen 27 - 30 angeordnet sein. Dieses gilt insbesondere für die einstegig ausgebildeten Einzelprofile 18, 19.

In jedem Fall kommt es darauf an, daß die Verzahnung durch die C-förmigen Nuten 21 - 26 in diametraler Richtung in bezug auf die durch die Segmente 34, 35 bzw. 36, 37 bzw. 38, 39 verlaufende Mittelachse angeordnet sind. Dadurch soll verhindert werden, daß durch ungleichmäßige Beanspruchung der Verbund der Einzelprofile gelöst wird. Geringfügige Maßabweichungen können durch die Spreizwirkung der Innenrohre 31 - 33 kompensiert werden.

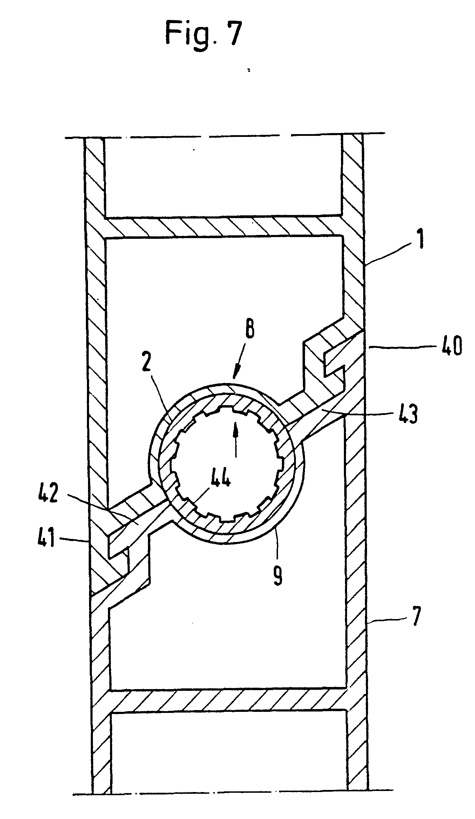

In Fig. 7 ist eine Verklammerung mit C-förmigen Nuten 40, 41 gezeigt, die durch ihre Schräglage gemäß Anspruch 8 eine bessere Übertragung der Querkräfte ermöglicht. Man erkennt deutlich - ebenso wie in den Fig. 1 bis 6 - die Verdünnung der Schalensegmente 8, 9 im Vergleich zu den Stegen an den Berührungsflächen 42, 43. Damit soll erreicht werden, daß nach Aufweitung des Spreizkörpers eine Verspannung zwischen diesen und den Halbschalen durch elastische Dehnung der Halbschalen 8, 9 erfolgt. Die Innenwand des Spreizkörpers ist mit Längsrippen 44 versehen, um die Reibung des Ziehdorns zu vermindern und die Versteifung nach dem Aufdornen zu vergrößern. Ferner wird zum Transport flüssiger und gasförmiger Medien der Spreizkörper 2 aus einem Werkstoff hergestellt, der einerseits wenig korrosionsanfällig im Hinblick auf die zu transportierenden Medien ist und andererseits mit dem Aluminiumprofil eine nicht lösbare Verspannung eingeht. Durch längere Versuche wurden die Werkstoffgruppen Aluminium/Kupfer und Aluminium/Nirosta-Stahl als geeignet ermittelt.

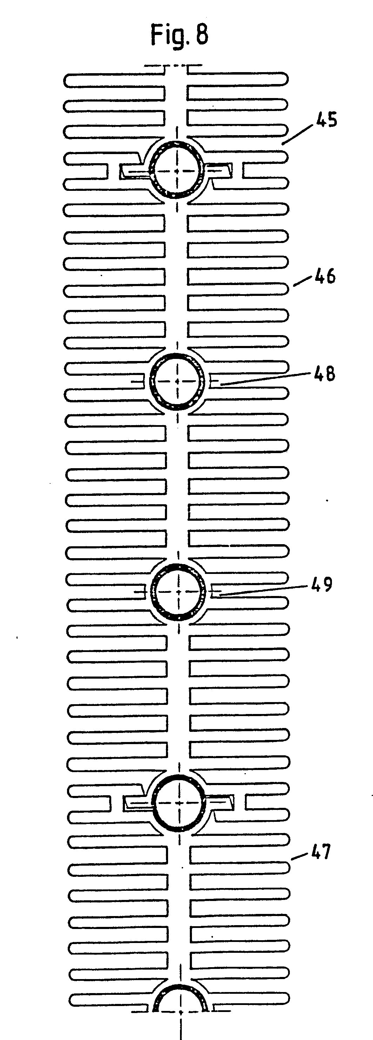

Ein Ausführungsbeispiel ist in Fig. 8 dargestellt, wobei die Wärmetauscherelemente 45, 46, 47 untereinander nach dem erfindungsgemäßen System verbunden sind. Die Rohre 48, 49 sind durch Aufdornen mit dem Aluminiumprofil 46 kraftschlüssig verbunden.

## Patentansprüche

1. Verbundprofil aus mindestens zwei Einzelprofilen, die an mindestens einer Seitenfläche eine gemeinsame Berührungsebene bilden und formschlüssig miteinander verklammert sind, wobei die Einzelprofile (1, 7), an der die Berührungsebene bildenden Seitenflächen mindestens je ein Schalensegment (8, 9) aufweisen, die in diametraler Richtung in bezug auf die durch die Segmente verlaufenden Mittelachsen verzahnt sind und in die ein Verbindungskörper eingelegt ist, dadurch gekennzeichnet, daß der Verbindungskörper ein Spreizkörper (2) ist, der im eingelegten Zustand mechanisch aufgeweitet worden ist.

2. Verbundprofil nach Anspruch 1, dadurch gekennzeichnet, daß die Verzahnung duch C-förmige Nuten (3 - 6) gebildet wird.

3. Verbundprofil nach einem der vorhergehenden Ansprüche, dadurch gekennzeichnet, daß die Schalensegmente (8, 9) einen halbkreisförmigen Querschnitt aufweisen.

4. Verbundprofil nach einem der vorhergehenden Ansprüche, dadurch gekennzeichnet, daß zwischen den Schalensegmenten (8, 9) mindestens ein mechanisch aufgeweitetes Innenrohr angeordnet ist.

5. Verbundprofil nach einem der vorhergehenden Ansprüche, dadurch gekennzeichnet, daß die Wandstärke der Schalensegmente (8, 9) dünner ausgeführt ist als die Wandstärke der Einzelprofile (1, 7) an der gemeinsamen Berührungsebene.

6. Verbundprofil nach einem der vorhergehenden Ansprüche, dadurch gekennzeichnet, daß der Spreizkörper (2) aus einem ovalen Rohr (11) besteht, dessen Hochachse senkrecht zur Berührungsfläche steht.

7. Verbundprofil nach einem der vorhergehenden Ansprüche, dadurch gekennzeichnet, daß der Spreizkörper (2) in der Innenwand mit Längsrippen (44) versehen ist.

8. Verbundprofil nach einem der vorhergehenden Ansprüche, dadurch gekennzeichnet, daß die Berührungsfläche (42, 43) diametral zur Mittelachse der Einzelprofile in einem Winkel von 20 - 40° verlaufen.

9. Verbundprofil nach einem der vorhergehenden Ansprüche, dadurch gekennzeichnet, daß der Spreizkörper (2) aus Kupfer besteht und die Einzelprofile aus Aluminium mit Wärmetauscherrippen versehen sind.

10. Verfahren zum Verbinden von langgestreckten Profilen, die mit mindestens je einer Seitenfläche eine gemeinsame Berührungsebene bilden, wobei in der Berührungsebene ein Verbindungskörper zwischen schalenförmig ausgebildeten Segmenten eingelegt wird und die Profile an der Berührungsfläche in diametraler Richtung in bezug auf die durch die Segmente verlaufende Mittelachse verzahnt werden, dadurch gekennzeichnet, daß der Verbindungskörper mechanisch aufgeweitet wird.

11. Verfahren nach Anspruch 10, dadurch gekennzeichnet, daß die Schalensegmente zu jeweils einem rohrförmigen Körper verhakt werden.

12. Verfahren nach Anspruch 10 oder 11, dadurch gekennzeichnet, daß die Wandung des rohrförmigen Körpers beim mechanischen Aufweiten des Verbindungskörpers in Umfangsrichtung gedehnt wird.

13. Verfahren nach einem der Ansprüche 10, 11 oder 12, dadurch gekennzeichnet, daß der Verbindungskörper ein Rohr ist und das mechanische Aufweiten über einen Dorn erfolgt, der mit Übermaß durch das Rohr gezogen wird.

## Claims

1. A compound structural member of profiled cross section comprising at least two individual members, each having at least one side-surface which rests in contact with a side-surface of the other member, the two members locking positively together; each contacting side-surface having at least one bowl-shaped recess (8, 9), the two members (1, 7) being locked together by interengaging locking means disposed diametrically of the recess; the joint containing an inserted joining element, characterized in that the joining element is a spreader (2) which has been mechanically expanded when in situ.

2. A compound structural member as claimed in Claim 1, characterized in that the interengaging locking means is in the form of C-shaped grooves (3 to 6).

3. A compound structural member as claimed in one of the above claims, characterized in that each bowl-shaped recess (8, 9) is semi-circular in cross section.

4. A compound structural member as claimed in one of the above claims, characterized in that inserted between the bowl-shaped recesses (8, 9) there is at least one mechanically expanded inner tube.

5. A compound structural member as claimed in one of the above claims, characterized in that the wall thickness of each bowl-shaped recess (8, 9) is less than the wall thickness of each structural member (1, 7) at the contacting surface.

6. A compound structural member as claimed in one of the above claims, characterized in that the spreader (2) is a tube (11) of oval cross section positioned with its greater diameter perpendicular to the contacting surface.

7. A compound structural member as claimed in one of the above claims, characterized in that the spreader (2) has longitudinal ribs (44) on its inner surface.

8. A compound structural member as claimed in one of the above claims, characterized in that the contacting surface (42, 43) is situated in a diametric plane forming an angle of 20 to 40° with the middle axis of the structural member.

9. A compound structural member as claimed in one of the above claims, characterized in that the spreader (2) is made of copper, each structural member being of aluminium and equipped with heat-exchanging ribs.

10. A process for joining together long structural members of profiled cross section each of which has at least one side-surface resting in contact with a side-surface of the other member; the common contacting surfaces having bowl-shaped recesses, as seen in cross section and with a joining element inserted in said recesses; the structural members being locked together by interengaging locking means disposed diametrically of the bowl-shaped recesses, characterized in that the joining element is mechanically expanded.

11. A process as claimed in claim 10, characterized in that the bowl-shaped recesses are brought together to form a tubular body.

12. A process as claimed in claims 10 or 11, characterized in that the resulting tubular body is stretched circumferentially during the mechanical expansion.

13. A process as claimed in claims 10, 11 or 12, characterized in that the joining element is a tube which is expanded by drawing an over-dimensioned mandrel through the tube.

## Revendications

1. Profilé composite se composant d'au moins deux profilés individuels qui forment, au moins sur une surface latérale, un plan de contact commun et qui sont assemblés mutuellement par conjugaison de formes, les profilés individuels (1, 7) comportant, sur les surfaces latérales formant le plan de contact, chacun au moins un segment de coquille (8, 9), ces segments étant dentés dans une direction diamétrale par rapport aux axes centraux traversant les segments et recevant un corps de liaison, caractérisé en ce que le corps de liaison est un corps d'expansion (2) qui a été expansé mécaniquement dans sa position montée.

2. Profilé composite selon la revendication 1, caractérisé en ce que la partie dentée est constituée par des rainures en forme de C (3 - 6).

3. Profilé composite selon une des revendications précédentes, caractérisé en ce que les segments de coquilles (8, 9) ont une section de forme semi-circulaire.

4. Profilé composite selon une des revendications précédentes, caractérisé en ce qu'au moins un tube intérieur expansé mécaniquement est disposé entre les segments de coquille (8, 9).

5. Profilé composite selon une des revendications précédentes, caractérisé en ce que la paroi des segments de coquille (8, 9) est réalisée plus mince que la paroi des profils individuels (1, 7) dans le plan de contact commun.

6. Profilé composite selon une des revendications précédentes, caractérisé en ce que le corps d'expansion (2) se compose d'un tube ovale (11) dont le grand axe est orienté perpendiculairement à la surface de contact.

7. Profilé composite selon une des revendications précédentes, caractérisé en ce que le corps d'expansion (2) est pourvu de nervures longitudinales (44) dans la paroi intérieure.

8. Profilé composite selon une des revendications précédentes, caractérisé en ce que la surface de contact (42, 43) fait un angle de 20 à 40° diamétralement par rapport à l'axe central des profilés individuels.

9. Profilé composite selon une des revendications précédentes, caractérisé en ce que le corps d'expansion (2) est formé de cuivre et les profilés individuels sont formés d'aluminium et comportent des nervures d'échange de chaleur.

10. Procédé pour assembler des profilés allongés, qui forment, chacun par au moins une surface latérale, un plan de contact commun dans lequel est placé un corps de liaison entre des segments agencés en forme de coquilles et les profilés sont dentés sur la surface de contact dans une direction diamétrale par rapport aux axes centraux traversant les segments, caractérisé en ce que le corps de liaison est expansé mécaniquement.

11. Procédé selon la revendication 10, caractérisé en ce que les segments de coquille sont accrochés chacun à un corps de forme tubulaire.

12. Procédé selon une des revendications 10 ou 11, caractérisé en ce que la paroi du corps de forme tubulaire est allongée dans une direction périphérique lors de l'expansion mécanique du corps de liaison.

13. Procédé selon une des revendications 10, 11 ou 12, caractérisé en ce que le corps de liaison est un tube et l'expansion mécanique est effectuée par l'intermédiaire d'un mandrin qui est surdimensionné et qui est tiré au travers du tube.

Fig.1

Fig.2

Fig.3

Fig.4

Fig.5

Fig.6

# Fig. 7

## Fig. 8

7